# EUROPEAN PATENT SPECIFICATION

(11) **EP 2 501 929 B1**
(45) Date of publication and mention of the grant of the patent: **01.10.2014**
(21) Application number: 10776720.4
(22) Date of filing: 15.11.2010
(51) Int. Cl.: F03D 9/00, E04H 12/16, E04H 12/12, F03D 11/04, F03D 1/00

(54) **WIND POWER PLANT FOR PRODUCING ELECTRIC ENERGY, AND RELATIVE PYLON CONSTRUCTION METHOD**
WINDKRAFTANLAGE ZUR STROMERZEUGUNG UND ZUGEHÖRIGES MASTKONSTRUKTIONSVERFAHREN
CENTRALE À ÉNERGIE ÉOLIENNE POUR PRODUIRE DE L'ÉNERGIE ÉLECTRIQUE, ET PROCÉDÉ DE CONSTRUCTION DE PYLÔNE ASSOCIÉ

(30) Priority: 16.11.2009 IT MI20092007
(43) Date of publication of application: 26.09.2012
(73) Proprietor: WILIC S.ÀR.L., 1528 Luxembourg (LU)
(72) Inventor: PABST, Otto, I-39037 Rio Di Pusteria (IT)
(74) Representative: Eccetto, Mauro
(86) International application number: PCT/EP2010/067431
(87) International publication number: WO 2011/058158

(56) References cited:
- WO-A1-92/01850
- WO-A1-03/069099
- WO-A2-2009/056969
- DE-U1-202007 003 842
- JP-A- 2007 321 710
- JP-A- 2008 101 363

## Description

### TECHNICAL FIELD

The present invention relates to a wind power plant for producing electric energy.

More specifically, the present invention relates to a wind power plant comprising a reinforced-concrete foundation; a pylon extending along a vertical axis and comprising at least one portion made of panels assembled to one another on site; an electric generator mounted on top of the pylon; and a blade assembly for driving the generator.

### BACKGROUND ART

The technique of constructing pylons from panels is normally used for exceptionally large pylons that are difficult to transport and handle. The documents listed below relate to wind power plants comprising pylons made from panels, and which, to the Applicant's knowledge, represent the state of the art in this regard :
Document DE 10 2007 018 025 A1 relates to a wind power plant comprising a truncated-cone- or truncated-pyramid-shaped pylon made of curved or angled steel panels.
Documents DE 20 2006 009 554 U1 and EP 1 262 614 A2 relate to wind power plant pylons made partly of reinforced concrete and partly of steel.
Documents EP 1 876 316 A1, JP 2008 101363 A, JP 2009 57713 A, US 2006/0272244 A1, US 2007/0294955 A1, US2005/0129504, WO 2008/110309 A2, and WO 2009/056898 A1 relate to wind power plant pylons made of steel or reinforced-concrete panels.

Obviously, the smaller the panels, the lighter they are, they are easier to handle and transport, and can be made in modular or standard sizes, regardless of the upward-tapering cross section of the pylon. On the other hand, small panels involve a large number of joints, which must be made on site by skilled workmen working at considerable heights, and must be checked cyclically for safety reasons. Consequently, the best solution is to use relatively large panels to reduce the number of joints, but not large or heavy enough to make them difficult to transport or handle.

In the case of high-power plants with exceptionally heavy generators, the current practice is to construct pylons in which at least the bottom portion, i.e. the portion resting directly on the foundation, is made of prefabricated reinforced-concrete panels, which are lighter than corresponding steel portions.

### DISCLOSURE OF INVENTION

It is an object of the present invention to provide a wind power plant of the above type, comprising a pylon which is easy to construct and, at the same time, structurally strong.

Another object of the present invention to provide a wind power plant of the above type, comprising a pylon made at least partly of assembled panels that are easy to produce, and the size of which can be altered easily when necessary.
According to the present invention, there is provided a wind power plant for producing electric energy according to claim 1, the wind power plant comprising a foundation; a pylon extending along a given axis; an electric generator mounted on top of the pylon; and a blade assembly for driving the generator; the pylon comprising at least one portion made of flat, reinforced-concrete, adjacent panels assembled so the portion has a polygonal cross section, wherein each panel comprises an outer face, an inner face, and two lateral faces, is fixed by the lateral faces to the adjacent panels, and comprises a main body of reinforced concrete; and lateral plates integral with the main body and at least partly defining the lateral faces of the panel; the lateral plates preferably defining the whole of the lateral faces of the panel.

Using only flat, reinforced-concrete panels, as opposed to curved or angled panels, the panels can be made using a vibrating machine, with no need for complex molds; the size of the panels can be altered easily when necessary; and, being simple in shape, the panels can even be produced at the wind power system erection site.

In a preferred embodiment of the present invention, each panel is in the form of an isosceles trapezium, the height of which is greater than its mean width; said height being at least three times, and preferably six times, the mean width.

Relatively long panels can thus be produced, to construct long pylon portions and so speed up construction of the pylon as a whole and reduce the number of joints.

Another object of the present invention is to provide a straightforward, low-cost method of constructing a wind power plant pylon.

According to the present invention, there is provided a method of constructing a pylon of a wind power plant according to claim 11, wherein the wind power plant comprises a foundation; the pylon, which extends along a given axis; an electric generator mounted on top of the pylon; and a blade assembly for driving the generator; the pylon comprising at least one portion made of flat, reinforced-concrete, adjacent panels assembled so the portion has a polygonal cross section; and the method comprising the steps of :
a) pouring concrete into a mold at least partly forming an integral part of said panel;
b) producing a number of panels as in step a);
c) arranging said number of panels about the axis, so each panel is adjacent to two panels;
d) joining the adjacent panels,
wherein the mold is defined by a table of a vibrating machine, by lateral plates, by a top plate, and by a bottom plate; the lateral plates, the top plate, and the bottom plate being joined to the main body and forming an integral part of the panel.

Construction of the pylon portion is thus easier, and can be carried out even entirely on site.

The molds are thus easy to make and, above all, the plates perform important functions within the panel: the lateral plates define the lateral mating faces and connecting portions of adjacent panels, and impart flexural strength to the panel even before it is stressed; and the top and bottom plates define the top and bottom mating faces of the panel, and serve to distribute compressive stress evenly in the main body.

In a preferred embodiment of the present invention, the method comprises the step of lifting each panel from a substantially horizontal position to a substantially vertical position using a structure hinged to the foundation and for housing the panel.

Unlike methods in which panels are lifted using a crane, the panel is thus guided into position by a structure that prevents it from oscillating, thus making the job safer, reducing the risk of damage to the panel, while at the same time positioning the panel faster and so speeding up construction of the pylon as a whole.

### BRIEF DESCRIPTION OF THE DRAWINGS

A non-limiting embodiment of the present invention will be described by way of example with reference to the accompanying drawings, in which :
Figure 1 shows a side view, with parts removed for clarity, of a wind power plant in accordance with the present invention;
Figure 2 shows a plan view, with parts removed for clarity, of a detail of Figure 1;
Figure 3 shows a cross section, with parts removed for clarity, along line III-III of the Figure 1 plant;
Figure 4 shows a larger-scale detail of the Figure 3 cross section;
Figures 5 and 6 show larger-scale sections, with parts removed for clarity, of a detail of the Figure 1 plant in two different planes;
Figure 7 shows a view in perspective of a panel during construction and positioned on a vibrating machine in accordance with the method according to the present invention;
Figures 8 and 9 show two sections of respective steps in assembling a panel in accordance with the method according to the present invention.

### BEST MODE FOR CARRYING OUT THE INVENTION

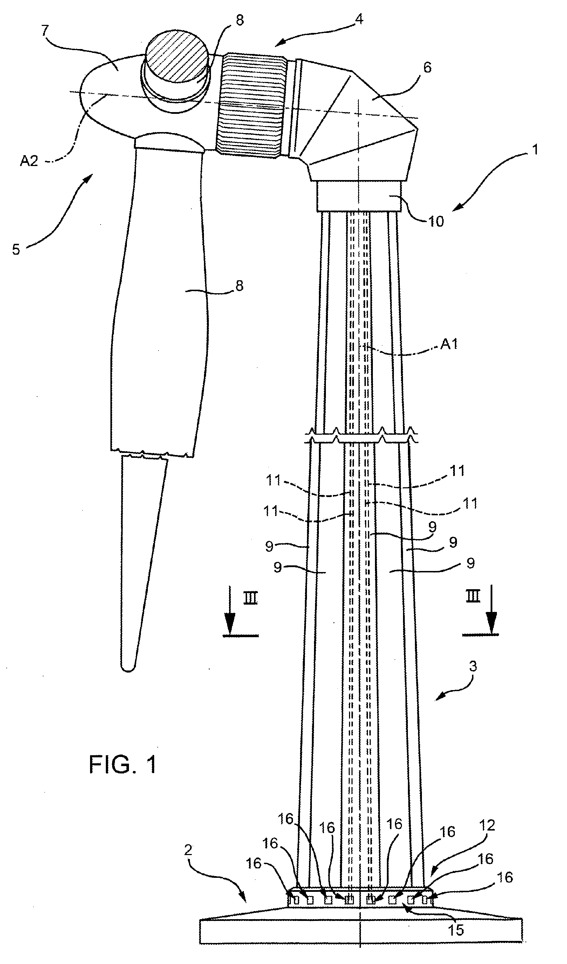

Number 1 in Figure 1 indicates as a whole a wind power plant for producing electric energy, and which comprises a reinforced-concrete foundation 2; a pylon 3 extending along a vertical axis A1; an electric generator 4 mounted on top of pylon 3; and a blade assembly 5 for driving generator 4 and which rotates about an axis A2.

Generator 4 is fixed to a nacelle 6 which rotates with respect to pylon 3 about axis A1; and blade assembly 5 comprises a hub 7 integral with the rotor (not shown) of generator 4, and three blades 8, of which only two are shown in Figure 1.

In the Figure 1 example, pylon 3 is defined by flat, reinforced-concrete panels 9 evenly distributed about axis A1 and connected to one another; and by a ring 10 on the top end of panels 9. Panels 9 are identical, and are isosceles-trapezium-shaped so pylon 3 tapers upwards once they are assembled.

The height of each panel is greater than its mean width, and is at least three times and, in the example shown, ten times the mean width.

In the example shown, pylon 3 comprises ten identical panels 9, so it has a cross section in the form of a regular decagon tapering upwards. The number of ten panels 9 arranged in a circle about axis A1 obviously in no way limits the present invention.

In the Figure 1 example, the pylon is defined by one portion comprising panels 9 and ring 10, though the present invention also extends to embodiments (not shown) in which the pylon is defined by a portion comprising panels 9 and ring 10, and by steel portions fixed to ring 10, or is defined by a number of reinforced-concrete portions comprising respective panels and respective rings.

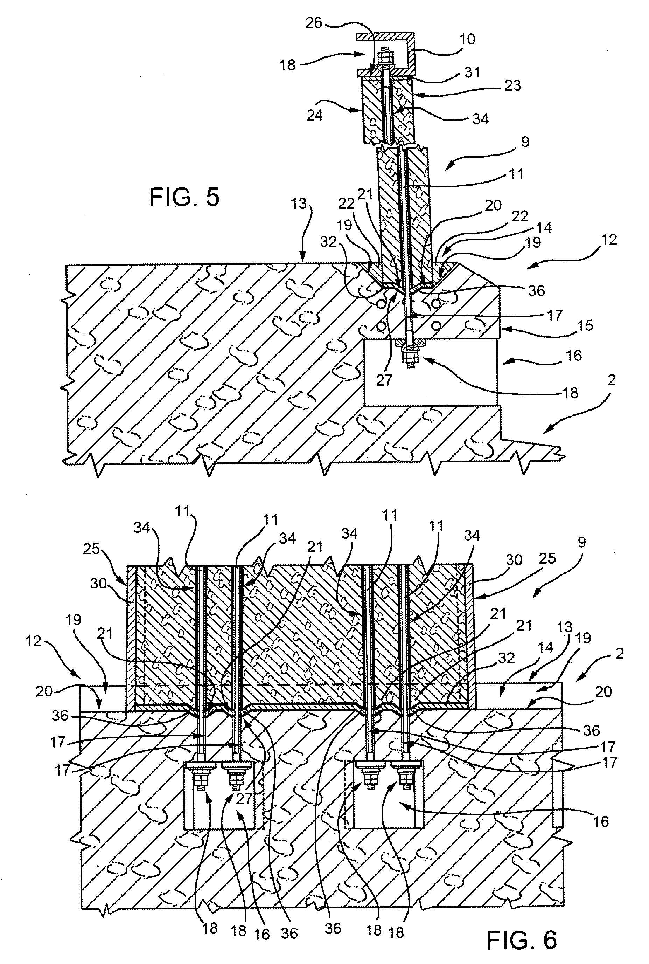

Once panels 9 are assembled to one another, each is compressed by cables 11 housed inside and extending the full height of panel 9. Cables 11 are anchored to foundation 2 and to ring 10, as shown more clearly in Figure 5, and serve to precompress panel 9 to enable the concrete to withstand tensile/bending stress.

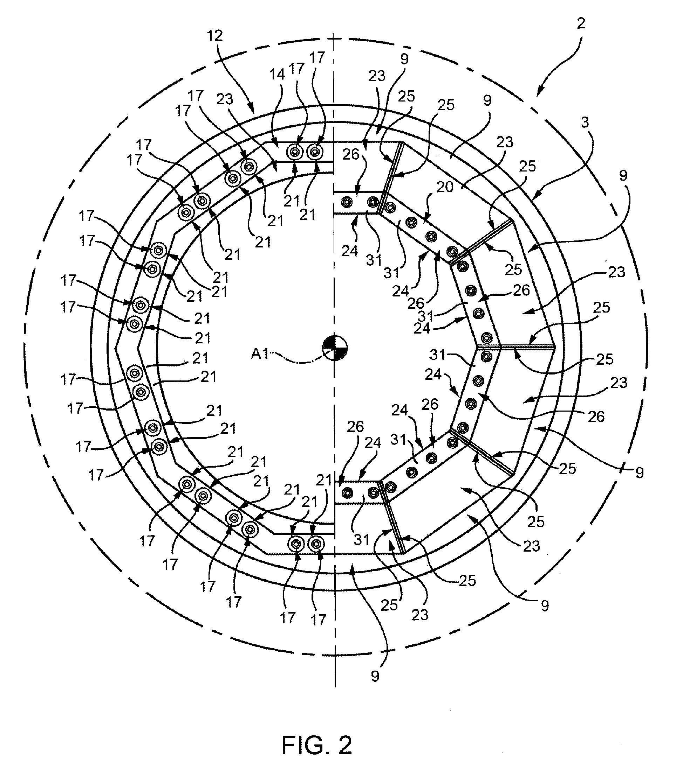

Foundation 2 comprises a platform 12 for supporting panels 9. As shown in Figure 2, platform 12 has a top face 13; and a seat 14 (Figures 5 and 6)which extends about axis A1 on top face 13, and serves to house panels 9. As shown in Figure 1, platform 12 comprises a lateral face 15, in which are formed a number of cavities 16 equally spaced about axis A1 in the example shown. As shown more clearly in Figures 5 and 6, seat 14 communicates with each cavity 16 along holes 17 - in the example shown, four holes 17 - through which respective cables 11 extend. Each cable 11 is anchored to foundation 2 by a terminal 18 integral with the bottom end of cable 11 and resting against a face of one of cavities 16. Similarly, each cable 11 is anchored to ring 10 by a terminal 18 integral with the top end of cable 11 and resting against a face of ring 10.

As shown in Figure 5, seat 14 has flared lateral faces 19; and a bottom face 20, along which depressions 21 are formed at holes 17. Once panels 9 are inserted inside seat 14, the rest of seat 14 is filled with mortar 22, as shown in Figure 5.

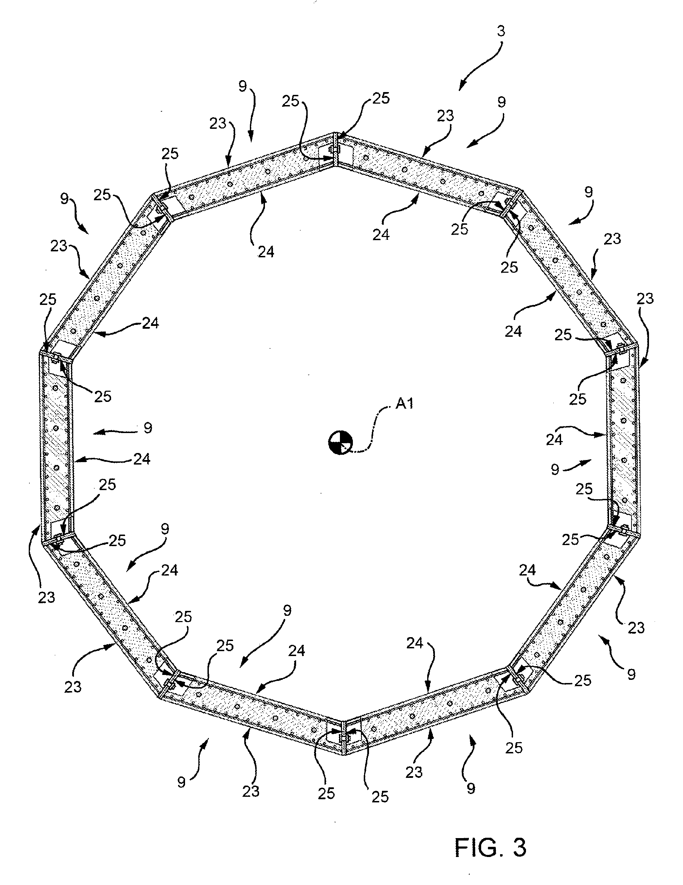

With reference to Figure 3, each panel 9 comprises an outer face 23; an inner face 24; two lateral faces 25; a top face 26 (on the right in Figure 2); and a bottom face 27 (Figure 5).

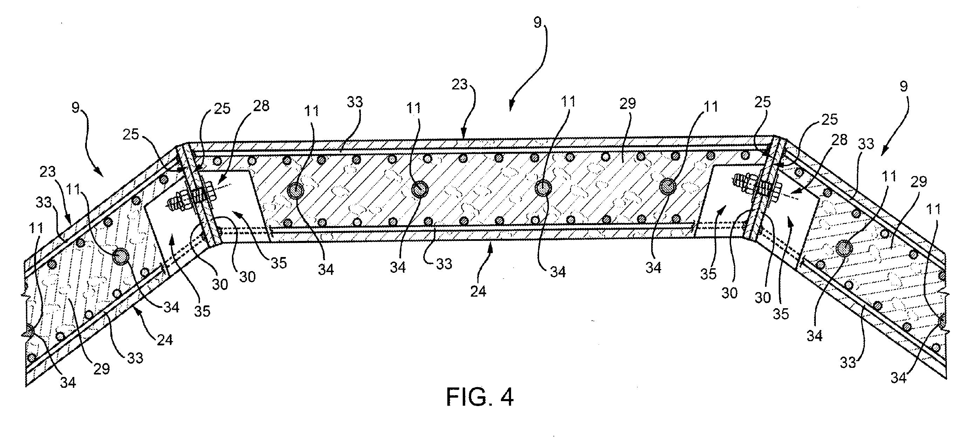

With reference to Figure 4, panels 9 are connected to one another along lateral faces 25 by means of fastening devices 28 which, in the example shown, are bolted joints. Each panel 9 comprises a main body 29; lateral plates 30; a top plate 31 (Figure 2); and a bottom plate 32 (Figures 5 and 6). Main body 29 is made of concrete, and incorporates reinforcement 33 - in the example shown, two metal mats - and four tubes 34 located between the metal mats of reinforcement 33 and for guiding cables 11 inside panel 9. Main body 29 defines outer face 23 and inner face 24, which are flat and parallel. And cavities 35 are formed along inner face 24, are partly defined by lateral plates 30, and serve to allow insertion of and access to fastening devices 28, which are inserted through lateral plates 30 of adjacent panels 9.

Lateral faces 25 extend along lateral plates 30, which have holes for fastening devices 28 to connect adjacent lateral plates 30 and, therefore, adjacent panels 9. Lateral plates 30, top plate 31, and bottom plate 32 (Figures 5, 6) are joined to main body 29 by known fasteners (not shown) which extend inside main body 29. As opposed to being joined directly to one another to form a frame, lateral plates 30, top plate 31, and bottom plate 32 are preferably connected to one another by the main body.

With reference to Figures 5 and 6, bottom plate 32 has projections 36 located at the holes through which cables 11 are threaded; and projections 36 engage respective depressions 21 to position panels 9 perfectly inside seat 14.

Reinforcement 33 is also not connected directly to lateral plates 30, top plate 31, and bottom plate 32; and tubes 34 are preferably connected to top plate 31 and bottom plate 32.

Lateral plates 30 preferably extend along the whole of panel 9 to stiffen and enhance the flexural strength of panel 9.

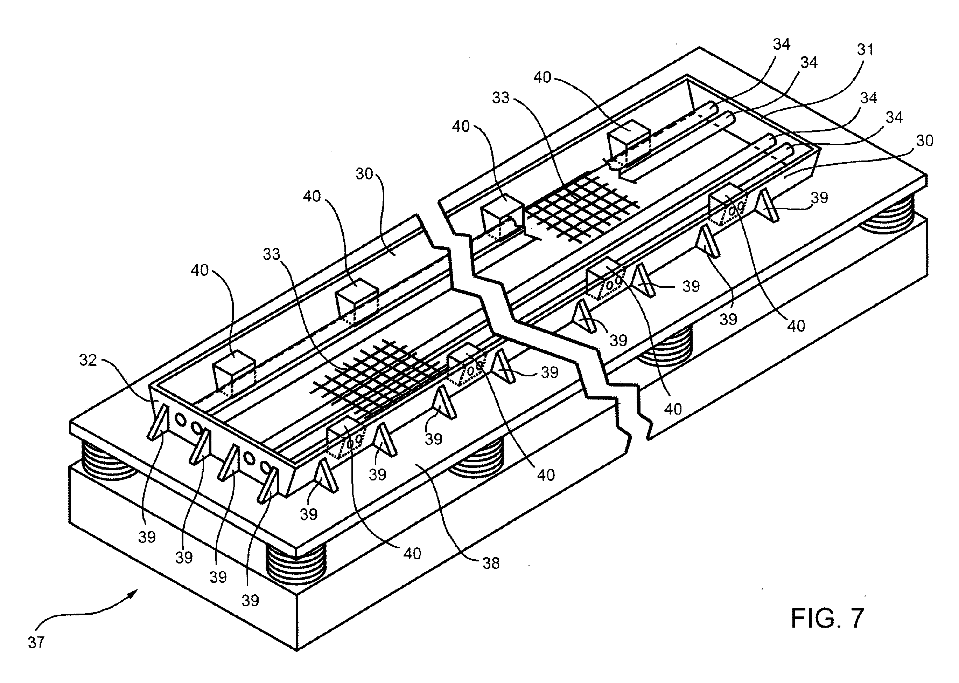

Figure 7 shows a panel 9 during construction and positioned on a vibrating machine 37, which is used to make concrete parts and comprises a vibrating table 38, on which the molds containing cement for thickening by vibration are placed.

In the Figure 7 example, the mold is defined by table 38, lateral plates 30, top plate 31, and bottom plate 32. Plates 30, 31, 32 are positioned to form a frame on table 38, and are kept in a more or less sloping position with respect to table 38 by preferably adjustable sloping supports 39.

Reinforcement 33 and tubes 34 are held in position by supports not shown in Figure 7, while bodies 40 are positioned contacting lateral plates 30 to complete the mold. Once the mold is formed, and the reinforcement, defined by mats 33, tubes 34, and bodies 40 are positioned inside the mold, concrete is poured over the reinforcement and tubes 34, and partly around bodies 40, to form body 29.

Once the concrete is set, panel 9 is ready for assembly to foundation 2 and to other similarly made panels 9 to form pylon 3.

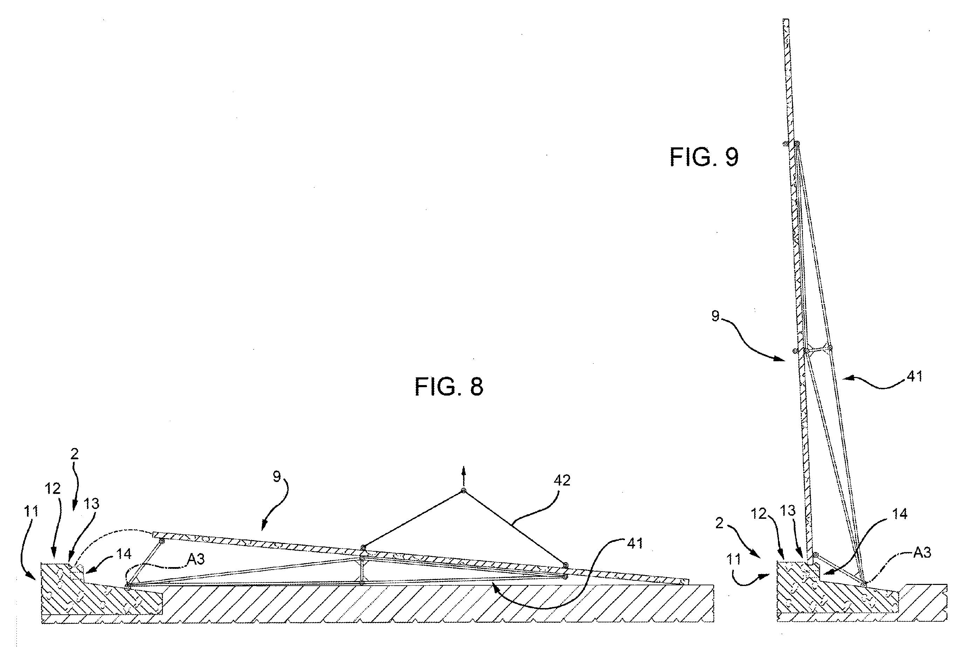

For easy assembly and handling of panels 9, which are extremely long and subject to severe bending stress, an elongated structure 41 (Figure 9) is used to form a cradle attachable to panel 9, and is hinged about an axis A3 parallel to the portion of seat 14 into which panel 9, supported by elongated structure 41, is inserted. Panel 9 is substantially positioned on elongated structure 41 so that, when elongated structure 41 rotates about axis A3, panel 9 is lifted into a substantially vertical position with the aid of a lifting machine (not shown) and possibly a harness 42.

In other words, panel 9 is rotated from a substantially horizontal position (Figure 8) to a substantially vertical position (Figure 9) by elongated structure 41 hinged to foundation 2 and for housing panel 9.

Scaffolding (not shown) may be erected on platform 12 to support panel 9 in a substantially vertical position and enable workers to work at different heights to connect panels 9.

As will be clear from the detailed description of the preferred embodiment of the present invention, the main advantages lie in greatly simplifying manufacture and assembly of the panels, and also in enabling easy alterations to the size of the panels.

Moreover, the lateral, top and bottom plates form part of the mold, and perform important structural functions within the finished panel.

Clearly, changes may be made to the wind power plant and method as described herein without, however, departing from the scope of the accompanying Claims.

## Claims

1. A wind power plant for producing electric energy, the wind power plant (1) comprising a foundation (2); a pylon (3) extending along a given axis (A1); an electric generator (4) mounted on top of the pylon (3); and a blade assembly (5) for driving the generator (4); the pylon (3) comprising at least one portion made of flat, reinforced-concrete, adjacent panels (9) assembled so the portion has a polygonal cross section, wherein each panel (9) comprises an outer face (23), an inner face (24), and two lateral faces (25), is fixed by the lateral faces (25) to the adjacent panels (9), and comprises a main body (29) of reinforced concrete; and lateral plates (30) integral with the main body (29) and at least partly defining the lateral faces (25) of the panel (9); the lateral plates (30) preferably defining the whole of the lateral faces (25) of the panel (9).

2. A wind power plant as claimed in Claim 1, wherein the portion of the pylon (3) is made of identical panels (9).

3. A wind power plant as claimed in Claim 1 or 2, wherein each panel (9) is in the form of an isosceles trapezium, the height of which is greater than its mean width; said height being at least three times, and preferably six times, the mean width.

4. A wind power plant as claimed in any one of the foregoing Claims, and comprising a number of fastening devices (28), each engaging a pair of contacting lateral plates (30) of two adjacent panels (9).

5. A wind power plant as claimed in Claim 4, wherein each main body (29) has cavities (35) adjacent to the lateral plates (30); each cavity (35) partly housing a fastening device (28) for fastening two adjacent lateral plates (30); and the cavities (35) preferably being evenly distributed along the panel (9) and bounded partly by one of the lateral plates (30).

6. A wind power plant as claimed in any one of the foregoing Claims, wherein the foundation (2) has a polygonal seat (14) about the axis (A1) and for housing the panels (9).

7. A wind power plant as claimed in Claim 4, wherein each panel (9) comprises a main body (29) of reinforced concrete; and a bottom plate (32) defining a bottom face (27) of the panel (9), which is housed inside said seat (14).

8. A wind power plant as claimed in Claim 5, wherein said seat (14) has a straight portion for housing a respective panel (9); the straight portion of the seat (14) and the bottom plate (32) of the panel (9) having respective locators for locating the panel (9) with respect to the foundation (2); and the locators preferably comprising depressions (21) and projections (36).

9. A wind power plant as claimed in any one of the foregoing Claims, wherein each panel (9) comprises a main body (29) of reinforced concrete; and a top plate (31) defining a top face (26) of the panel (9).

10. A wind power plant as claimed in any one of the foregoing Claims, wherein each panel (9) is stressed by cables (11) extending between the foundation (2) and the top of the panel, and anchored to the foundation and to a ring (10) on top of the panels (9).

11. A method of constructing a pylon (3) of a wind power plant according to claim 1 (1), wherein the wind power plant (1) comprises a foundation (2); the pylon (3) which extends along a given axis (A1); an electric generator (4) mounted on top of the pylon (3); and a blade assembly (5) for driving the generator (4); the pylon (3) comprising at least one portion made of flat, reinforced-concrete adjacent panels (9) assembled so the portion has a polygonal cross section; and the method comprising the steps of :
a) pouring concrete into a mold at least partly forming an integral part of said panel (9);
b) producing a number of panels (9) as in step a);
c) arranging said number of panels (9) about the axis (A1) so each panel (9) is adjacent to two panels (9);
d) joining the adjacent panels (9), wherein the mold is defined by a table (38) of a vibrating machine (37), by lateral plates (30), by a top plate (31), and by a bottom plate (32); the lateral plates (30), the top plate (31), and the bottom plate (32) being joined to the main body (29) and forming an integral part of the panel (9).

12. A method as claimed in Claim 11, wherein the mold comprises bodies (40) adjacent to the lateral plates (30) and for defining cavities (35) in the panel (9).

13. A method as claimed in Claim 11 or 12, and comprising the step of raising each panel (9) from a substantially horizontal position to a substantially vertical position by means of a structure (41) hinged to the foundation (2) and housing the panel (9).

## Patentansprüche

1. Windkraftanlage zum Erzeugen von elektrischer Energie, wobei die Windkraftanlage (1) umfasst: einen Sockel (2); einen Mast (3), der sich entlang einer gegebenen Achse (A1) erstreckt; einen elektrischen Generator (4), der am Oberende des Mastes (3) montiert ist; und eine Schaufelanordnung (5) zum Betreiben des Generators (4); wobei der Mast (3) wenigstens einen Abschnitt aufweist, der aus flachen, betonverstärkten, benachbarten Paneelen (9) besteht, die derart zusammengesetzt sind, dass der Abschnitt einen vieleckigen Querschnitt aufweist, wobei jedes Paneel (9) eine äußere Fläche (23), eine innere Fläche (24) und zwei seitliche Flächen (25) aufweist, durch die seitlichen Flächen (25) an den benachbarten Paneelen (9) fixiert ist sowie einen Hauptkörper (29) aus verstärktem Beton und seitliche Platten (30) umfasst, die integral mit dem Hauptkörper (29) sind und wenigstens teilweise die seitlichen Flächen (25) des Paneels (9) festlegen; wobei die seitlichen Platten (30) vorzugsweise die Gesamtheit der seitlichen Flächen (25) des Paneels (9) festlegen.

2. Windkraftanlage nach Anspruch 1, wobei der Abschnitt des Mastes (3) aus identischen Paneelen (9) besteht.

3. Windkraftanlage nach Anspruch 1 oder 2, wobei jedes Paneel (9) in Form eines gleichschenkligen Trapezes vorliegt, dessen Höhe größer als dessen mittlere Breite ist; wobei die Höhe wenigstens das Dreifache und vorzugsweise das Sechsfache der mittleren Breite ist.

4. Windkraftanlage nach einem der vorhergehenden Ansprüche, umfassend eine Anzahl von Befestigungsvorrichtungen (28), die jeweils mit einem Paar von seitlichen Kontaktplatten (30) von zwei benachbarten Paneelen (9) in Eingriff sind.

5. Windkraftanlage nach Anspruch 4, wobei jeder Hauptkörper (29) Hohlräume (35) benachbart zu den seitlichen Platten (30) aufweist; jeder Hohlraum (35) teilweise eine Befestigungsvorrichtung (28) zum Befestigen von zwei benachbarten seitlichen Platten (30) aufnimmt; und die Hohlräume (35) vorzugsweise gleichmäßig entlang des Paneels (9) verteilt und teilweise durch eine der seitlichen Platten (30) verbunden sind.

6. Windkraftanlage nach einem der vorhergehenden Ansprüche, wobei der Sockel (2) einen vieleckigen Sitz (14) um die Achse (A1) herum zum Aufnehmen der Paneele (9) aufweist.

7. Windkraftanlage nach Anspruch 4, wobei jedes Paneel (9) umfasst: einen Hauptkörper (29) aus verstärktem Beton; und eine untere Platte (32), die eine untere Fläche (27) des Paneels (9) festlegt, die innerhalb des Sitzes (14) aufgenommen ist.

8. Windkraftanlage nach Anspruch 5, wobei der Sitz (14) einen geraden Abschnitt zum Aufnehmen eines jeweiligen Paneels (9) aufweist; der gerade Abschnitt des Sitzes (14) und die untere Platte (32) des Paneels (9) jeweilige Positionierhilfen zum Positionieren des Paneels (9) in Bezug auf den Sockel (2) aufweisen; und die Positionierhilfen vorzugsweise Vertiefungen (21) und Erhebungen (36) aufweisen.

9. Windkraftanlage nach einem der vorhergehenden Ansprüche, wobei jedes Paneel (9) umfasst: einen Hauptkörper (29) aus verstärktem Beton; und eine obere Platte (31), die eine obere Fläche (26) des Paneels (9) festlegt.

10. Windkraftanlage nach einem der vorhergehenden Ansprüche, wobei jedes Paneel (9) durch Kabel (11) unter Spannung gesetzt wird, die sich zwischen dem Sockel (2) und dem Oberende des Paneels erstrecken und an dem Sockel und an einem Ring (10) am Oberende der Paneele (9) verankert sind.

11. Verfahren zum Herstellen eines Mastes (3) einer Windkraftanlage (1) nach Anspruch 1, wobei die Windkraftanlage (1) umfasst: einen Sockel (2); den Mast (3), der sich entlang einer gegebenen Achse (A1) erstreckt; einen elektrischen Generator (4), der am Oberende des Mastes (3) montiert ist; und eine Schaufelanordnung (5) zum Betreiben des Generators (4); wobei der Mast (3) wenigstens einen Abschnitt aufweist, der aus flachen, betonverstärkten, benachbarten Paneelen (9) besteht, die derart zusammengesetzt sind, dass der Abschnitt einen vieleckigen Querschnitt aufweist; wobei das Verfahren die nachfolgenden Schritte umfasst:
(a) Gießen von Beton in eine Form, die wenigstens teilweise einen integralen Teil des Paneels (9) bildet;
(b) Herstellen einer Anzahl von Paneelen (9) wie bei Schritt (a);
(c) Anordnen der Anzahl von Paneelen (9) um die Achse (A1) derart, dass jedes Paneel (9) benachbart zu zwei Paneelen (9) ist;
(d) Zusammenfügen der benachbarten Paneele (9), wobei die Form von einem Tisch (38) einer Vibrationsmaschine (37), von seitlichen Platten (30), von einer obere Platte (31) und von einer unteren Platte (32) gebildet wird; die seitlichen Platten (30), die obere Platte (31) und die untere Platte (32) mit dem Hauptkörper (29) zusammengefügt sind und einen integralen Teil des Paneels (9) bilden.

12. Verfahren nach Anspruch 11, wobei die Form Körper (40) benachbart zu den seitlichen Platten (30) und zum Festlegen von Hohlräumen (35) in dem Paneel (9) umfasst.

13. Verfahren nach Anspruch 11 oder 12, umfassend den Schritt des Hebens eines jeden Paneels (9) aus einer im Wesentlichen horizontalen Position in eine im Wesentlichen vertikale Position mittels einer Struktur 41), die an dem Sockel (2) angelenkt ist und das Paneel (9) aufnimmt.

## Revendications

1. Eolienne destinée à produire de l'énergie électrique, l'éolienne (1) comprenant une base (2) ; un pylône (3) s'étendant le long d'un axe donné (A1) ; un générateur électrique (4) monté au sommet du pylône (3) ; et un ensemble de pales (5) destinées à entraîner le générateur (4) ; le pylône (3) comprenant au moins une partie constituée de panneaux (9), plats et adjacents, en béton armé assemblés de telle sorte que ladite partie a une section transversale polygonale, chaque panneau (9) comportant une face extérieure (23), une face intérieure (24) et deux faces latérales (25), chaque panneau étant fixé par les faces latérales (25) aux panneaux adjacents (9), et chaque panneau comprenant un corps principal (29) en béton armé ; et des plaques latérales (30) solidaires du corps principal (29) et définissant au moins partiellement les faces latérales (25) du panneau (9) ; les plaques latérales (30) définissant de préférence l'ensemble des faces latérales (25) du panneau (9).

2. Eolienne selon la revendication 1, dans laquelle ladite partie du pylône (3) est constituée de panneaux identiques (9).

3. Eolienne selon la revendication 1 ou 2, dans laquelle chaque panneau (9) se présente sous la forme d'un trapèze isocèle dont la hauteur est supérieure à sa largeur moyenne ; ladite hauteur étant égale à au moins trois fois, et de préférence six fois, la largeur moyenne.

4. Eolienne selon l'une quelconque des revendications précédentes, et comprenant un certain nombre de dispositifs de fixation (28), s'engageant chacun avec une paire de plaques latérales (30), en contact l'une avec l'autre, de deux panneaux adjacents (9).

5. Eolienne selon la revendication 4, dans laquelle chaque corps principal (29) comporte des cavités (35) adjacentes aux plaques latérales (30) ; chaque cavité (35) logeant partiellement un dispositif de fixation (28) destiné à fixer deux plaques latérales adjacentes (30) ; et les cavités (35) étant de préférence uniformément réparties le long du panneau (9) et partiellement délimitées par l'une des plaques latérales (30).

6. Eolienne selon l'une quelconque des revendications précédentes, dans laquelle la base (2) comporte un siège polygonal (14) situé autour de l'axe (Al) et destiné à loger les panneaux (9).

7. Eolienne selon la revendication 4, dans laquelle chaque panneau (9) comprend un corps principal (29) en béton armé ; et une plaque de fond (32) définissant une face inférieure (27) du panneau (9) qui est logé à l'intérieur dudit siège (14).

8. Eolienne selon la revendication 5, dans laquelle ledit siège (14) présente une partie rectiligne destinée à loger un panneau respectif (9) ; ladite partie rectiligne du siège (14) et la plaque de fond (32) du panneau (9) comportant des positionneurs respectifs destinés à positionner le panneau (9) par rapport à la base (2) ; et les positionneurs comprenant de préférence des dépressions (21) et des projections (36).

9. Eolienne selon l'une quelconque des revendications précédentes, dans laquelle chaque panneau (9) comprend un corps principal (29) en béton armé ; et une plaque supérieure (31) définissant une face supérieure (26) du panneau (9).

10. Eolienne selon l'une quelconque des revendications précédentes, dans laquelle chaque panneau (9) est contraint par des câbles (11) s'étendant entre la base (2) et le sommet du panneau, et ancrés à la base et à un anneau (10) au sommet des panneaux (9).

11. Procédé de construction d'un pylône (3) d'une éolienne (1) selon la revendication 1, dans lequel l'éolienne (1) comprend une base (2) ; le pylône (3) qui s'étend le long d'un axe donné (Al) ; un générateur électrique (4) monté au sommet du pylône (3) ; et un ensemble de pales (5) destinées à entraîner le générateur (4) ; le pylône (3) comprenant au moins une partie constituée de panneaux (9), plats et adjacents, en béton armé assemblés de telle sorte que ladite partie a une section transversale polygonale ; et le procédé comprenant les étapes consistant à :
a) couler du béton dans un moule faisant au moins partiellement partie intégrante dudit panneau (9) ;
b) produire un certain nombre de panneaux (9) comme dans l'étape a) ;
c) disposer ledit nombre de panneaux (9) autour de l'axe (A1) de telle sorte que chaque panneau (9) est adjacent à deux panneaux (9) ;
d) raccorder les panneaux adjacents (9), le moule étant défini par une table (38) d'une machine vibrante (37), par des plaques latérales (30), par une plaque supérieure (31), et par une plaque de fond (32) ; les plaques latérales (30), la plaque supérieure (31), et la plaque de fond (32) étant raccordées au corps principal (29) et faisant partie intégrante du panneau (9).

12. Procédé selon la revendication 11, dans lequel le moule comprend des corps (40) adjacents aux plaques latérales (30) et destinés à définir des cavités (35) dans le panneau (9).

13. Procédé selon la revendication 11 ou 12, et comprenant l'étape consistant à soulever chaque panneau (9) d'une position sensiblement horizontale à une position sensiblement verticale au moyen d'une structure (41) raccordée de façon articulée à la base (2) et logeant le panneau (9).
